# EUROPÄISCHE PATENTSCHRIFT

(11) **EP 2 835 000 B1**
(45) Veröffentlichungstag und Bekanntmachung des Hinweises auf die Patenterteilung: **23.03.2016**
(21) Anmeldenummer: 13711714.9
(22) Anmeldetag: 26.03.2013
(51) Int. Cl.: H04W 8/00, H04W 56/00

(54) **VERFAHREN ZUR INTEGRATION VON NETZTEILNEHMERN IN EIN AD-HOC-NETZWERK UND ZUGEHÖRIGES AD-HOC-NETZWERK**
METHOD FOR INTEGRATING NETWORK PARTICIPANTS INTO AN AD HOC NETWORK, AND CORRESPONDING AD HOC NETWORK
PROCÉDÉ D'INTÉGRATION D'ABONNÉS DE RÉSEAU DANS UN RÉSEAU AD HOC ET RÉSEAU AD HOC ASSOCIÉ

(30) Priorität: 02.04.2012 DE 102012205355
(43) Veröffentlichungstag der Anmeldung: 11.02.2015
(73) Patentinhaber: Rohde & Schwarz GmbH & Co. KG, 81671 München (DE)
(72) Erfinder: EICHLER, Stephan, München 81375 (DE)
(74) Vertreter: Körfer, Thomas
(86) Internationale Anmeldenummer: PCT/EP2013/056404
(87) Internationale Veröffentlichungsnummer: WO 2013/149886

(56) Entgegenhaltungen:
- EP-A1- 2 034 629
- US-A1- 2004 042 417
- US-A1- 2005 188 062

## Beschreibung

Die Erfindung betrifft ein Verfahren zur Integration von Netzteilnehmern in ein zeitsynchronisiertes ad-hoc-Netzwerk und zugehöriges ad-hoc-Netzwerk.

Moderne Funknetze sind als mobile ad-hoc-Netzwerke realisiert. Ad-hoc-Netzwerke weisen keine Infrastruktur zur Übertragung des Sprach- bzw. Datenverkehrs zwischen den einzelnen Netzteilnehmern auf. Die einzelnen Netzteilnehmer eines ad-hoc-Netzwerkes organisieren vielmehr die Übertragung des Sprach- bzw. Datenverkehrs selbst untereinander.

Eine ganz wesentliche Aufgabe in der Organisation und im Betrieb eines ad-hoc-Netzwerkes ist die zeitliche Synchronisierung der einzelnen Netzteilnehmer. Dabei werden zur Verhinderung einer Störung des Übertragungsverkehrs Frequenzsprungverfahren eingesetzt. Hierbei wird die Trägerfrequenz der Übertragung in einem bestimmten Zeitablauf nach einem bestimmten Frequenzmuster geändert. Das Frequenzmuster der Trägerfrequenz über der Zeit ist den einzelnen Netzteilnehmern eines ad-hoc-Netzwerkes bekannt. Damit alle Netzteilnehmer eines ad-hoc-Netzwerkes zum selben Zeitpunkt von einer Trägerfrequenz zur nächsten Trägerfrequenz des Frequenzmusters umschalten, benötigen sie eine identische Referenzzeit. Hierzu erfolgt in einem bestimmten Zeitraster eine Zeitsynchronisierung zwischen allen Netzteilnehmer des ad-hoc-Netzwerks.

Aus der WO 2011/154911 A1 sind eine Vorrichtung und ein Verfahren zur Zeitsynchronisierung zwischen den Netzteilnehmern eines ad-hoc-Netzwerkes bekannt. Hierbei wird das gesamte ad-hoc-Netzwerk in einzelne Verbände - so genannte Cluster - aus regional benachbarten Netzteilnehmern aufgeteilt, die jeweils in Sende- bzw. Empfangsreichweite zueinander positioniert sind. In diesem Fall erfolgt sowohl die Übertragung von Nutzdaten als auch die Zeitsynchronisierung innerhalb eines Clusters durch einen einzigen Übertragungsvorgang (so genannte one-hop-Übertragung). Neben dieser Intra-Zeitsynchronisierung innerhalb der einzelnen Cluster erfolgt über eine Inter-Zeitsynchronisierung zwischen jeweils benachbarten Clustern eine Zeitsynchronisierung innerhalb des gesamten ad-hoc-Netzwerkes.

Um eine Störung der Zeitsynchronisierung zu minimieren bzw. zu verhindern, wird die kontinuierliche Zeitsynchronisierung innerhalb eines Clusters jeweils von abwechselnden Netzteilnehmern eines Clusters durchgeführt, die in Sende- bzw. Empfangsreichweite zu allen übrigen Netzteilnehmern des Clusters positioniert sind. Dabei wird ein allen Netzteilnehmern des ad-hoc-Netzwerkes, insbesondere des Clusters, bekanntes, typischerweise kodiertes Synchronisierbitmuster an die übrigen Netzteilnehmer des Clusters übertragen. Die übrigen Netzteilnehmer des Clusters synchronisieren ihre interne Referenzzeit an der internen Referenzzeit des das Synchronisierbitmuster versendenden Netzteilnehmers, indem sie hierzu die in ihrer bisherigen internen Referenzzeit gemessene Empfangszeit des Synchronisierbitmuster, die in ihrer bisherigen internen Referenzzeit gemessene Zeit seit dem gemeinsamen Aktivieren aller Netzteilnehmer des Clusters und die im Synchronisierbitmuster hinterlegte und in der internen Referenzzeit des sendenden Netzteilnehmers gemessenen Sendezeit des Synchronisierbitmuster vergleichen.

In mobilen ad-hoc-Netzwerken, ändern sich die Positionen der einzelnen Netzteilnehmer ständig. Somit ändern sich für jeden Netzteilnehmer über der Zeit die jeweils regional benachbarten Netzteilnehmer des mobilen ad-hoc-Netzwerkes, insbesondere die regional benachbarten Netzteilnehmer im Cluster. Somit muss nicht nur die Vermittlung der Sprach- bzw. Datenübertragung - so genanntes Routing - zwischen dem sendenden Netzteilnehmer und dem zugehörigen empfangenden Netzteilnehmer in einem ad-hoc-Netzwerk, sondern auch die Zusammensetzung eines Clusters aus sich ständig ändernden Netzteilnehmern und die Zeitsynchronisierung zwischen den sich ständig ändernden Netzteilnehmern innerhalb eines Clusters kontinuierlich angepasst werden.

Aufgabe der Erfindung ist es deshalb, ein Verfahren zur Integration von neuen Netzteilnehmern in bestehende zeitsynchronisierte Cluster eines mobilen ad-hoc-Netzwerkes und die Zeitsynchronisierung des in den Cluster integrierten Netzteilnehmers mit den übrigen Netzteilnehmern des Clusters und ein entsprechend ausgelegtes mobiles ad-hoc-Netzwerk zu schaffen.

Die Aufgabe wird durch ein erfindungsgemäßes Verfahren zur Integration von Netzteilnehmern in ein zeitsynchronisiertes ad-hoc-Netzwerk mit den Merkmalen des Patentanspruchs 1 und durch ein erfindungsgemäßes ad-hoc-Netzwerk mit den Merkmalen des Patentanspruchs 16 gelöst. Vorteilhafte technische Erweiterungen sind in den jeweils abhängigen Patentansprüchen aufgeführt.

Da die Organisation des Betriebs eines Clusters, insbesondere für die Zeitsynchronisierung innerhalb eines Clusters der Fall des Entfernens eines Netzteilnehmers aus dem Clusters, im Vergleich zum Fall der Integration eines Netzteilnehmers in ein Cluster unproblematisch ist, wird im Folgenden nur der Fall der Integration eines Netzteilnehmers in ein Cluster betrachtet.

Auf der Basis der in einem mobilen ad-hoc-Netzwerk gebildeten Verbände von jeweils regional benachbarten Netzteilnehmern und der Zeitsynchronisierung aller Netzteilnehmer innerhalb jedes Verbandes ermittelt ein in einem Verband jeweils ausgewählter Netzteilnehmer, der an der Peripherie des jeweiligen Verbandes positioniert ist, die in den jeweiligen Verband zu integrierenden Netzteilnehmer. Durch die Auswahl eines Netzteilnehmers an der Peripherie des jeweiligen Verbandes ist es möglich, möglichst viele potentiell in den jeweiligen Verband zu integrierende Netzteilnehmer zu identifizieren. Die für die Integration identifizierten Netzteilnehmer werden anschließend mit den Netzteilnehmern des jeweiligen Verbandes zeitsynchronisiert.

Eine Identifizierung von in den jeweiligen Verband zu integrierenden Netzteilnehmern wird bevorzugt in bestimmten Zeitabständen wiederholt, wobei für die Identifizierung bevorzugt ein jeweils unterschiedlicher Netzteilnehmer des jeweiligen Verbandes ausgewählt wird.

Zusätzlich sind vorzugsweise die die Identifizierung von in den jeweiligen Verband zu integrierenden Netzteilnehmer durchführenden Netzteilnehmer bevorzugt so auszuwählen, dass sie maximal in der Sende- bzw. Empfangsreichweite einer vorher festgelegten Anzahl von Netzteilnehmern, die einem mit dem ad-hoc-Netzwerk zeitsynchronisierten Verband angehören, stehen bzw. dass sie im Idealfall in der Sende- bzw. Empfangsreichweite von keinem Netzteilnehmer, der einem mit dem ad-hoc-Netzwerk zeitsynchronisierten Verband angehört, stehen. Andernfalls ist mit einer hohen Wahrscheinlichkeit zu rechnen, dass alle in der Sende- bzw. Empfangsreichweite des ausgewählten Netzteilnehmers befindlichen Netzteilnehmer bereits in einem mit dem ad-hoc-Netzwerk zeitsynchronisierten Verband integriert sind, und es somit für den ausgewählten Netzteilnehmer unwahrscheinlich ist, einen in den eigenen Verband zu integrierenden Netzteilnehmer zu identifizieren. Die hierfür erforderliche Kenntnis über die in unmittelbarer regionaler Nachbarschaft eines Netzteilnehmers eines mobilen ad-hoc-Netzwerkes befindlichen Netzteilnehmer wird mit einem proaktiven Routing-Verfahren ständig aktualisiert.

Um einerseits die Übertragungseffizienz in einem mobilen ad-hoc-Netzwerk durch die Zeitsynchronisierung nicht unnötig zu verschlechtern und andererseits die Störung der Zeitsynchronisierung durch einen Dritten weitestmöglich zu unterbinden, wird bevorzugt die Zeitsynchronisierung in einzelnen ersten Zeitintervallen durchgeführt, die jeweils eine gleich bleibende minimal mögliche Dauer aufweisen und in einem statistisch schwankenden Zeitabstand zueinander beabstandet sind.

Die Zeitsynchronisierung innerhalb eines Verbandes wird vorzugsweise durch einen Netzteilnehmer des Verbandes durchgeführt, der in Sende- bzw. Empfangsreichweite zu allen übrigen Netzteilnehmern positioniert ist, um eine Erreichbarkeit und damit eine gemeinsame Zeitsynchronisierung aller Netzteilnehmer des jeweiligen Verbandes zu erreichen. Der Netzteilnehmer versendet zur Zeitsynchronisierung in einem ersten Zeitintervall eine allen Netzteilnehmern des ad-hoc-Netzwerkes bekannte Information zur Zeitsynchronisierung.

Die Zeitsynchronisierung innerhalb eines Verbandes von Netzteilnehmern wird bevorzugt ausgesetzt, solange sich die Anzahl von Netzteilnehmern innerhalb des jeweiligen Verbandes nicht ändert, um eine unnötige Verschlechterung der Übertragungseffizienz im ad-hoc-Netzwerk zu vermeiden.

In einer ersten bevorzugten Ausführungsform der Erfindung identifiziert der im jeweiligen Verband ausgewählte Netzteilnehmer einen einzelnen Netzteilnehmer, der in Sende- bzw. Empfangsreichweite zum ausgewählten Netzteilnehmer positioniert ist und beabsichtigt, dem ad-hoc-Netzwerk beizutreten.

In einer zweiten bevorzugten Ausführungsform der Erfindung identifiziert der im jeweiligen Verband ausgewählte Netzteilnehmer einen ganzen Verband von zueinander zeitsynchronisierten Netzteilnehmern, der beabsichtigt, dem ad-hoc-Netzwerk beizutreten, und der einen Netzteilnehmer in Sende- bzw. Empfangsreichweite zum ausgewählten Netzteilnehmer des jeweiligen mit dem ad-hoc-Netzwerk zeitsynchronisierten Verbands aufweist.

In einer ersten bevorzugten Variante der Erfindung, die sowohl in der ersten Ausführungsform als auch in der zweiten Ausführungsform der Erfindung realisierbar ist, erfolgt durch den ausgewählten Netzteilnehmer des jeweiligen mit dem ad-hoc-Netzwerk zeitsynchronisierten Verbandes die Suche nach einem einzelnen Netzteilnehmer oder nach einem Verband von zueinander zeitsynchronisierten Netzteilnehmern, der beabsichtigt bzw. die beabsichtigen, in den mit dem ad-hoc-Netzwerk zeitsynchronisierten Verband beizutreten.

Hierzu versendet der ausgewählte Netzteilnehmer in der ersten Ausführungsform der Erfindung eine Information zur Suche eines zu integrierenden Netzteilnehmers. Die Identifizierung des in den jeweiligen mit dem ad-hoc-Netzwerk zeitsynchronisierten Verband zu integrierenden Netzteilnehmers ist mit dem Empfang der Quittierung der Information zur Suche eines zu integrierenden Netzteilnehmers abgeschlossen, die der Netzteilnehmer mit der Absicht zur Integration in das ad-hoc-Netzwerk zurücksendet.

In der zweiten Ausführungsform der Erfindung versendet der ausgewählte Netzteilnehmer ebenfalls eine Information zur Suche eines zu integrierenden Netzteilnehmers. Die Identifizierung des Verbandes, der beabsichtigt, in den jeweiligen mit dem ad-hoc-Netzwerk zeitsynchronisierten Verband beizutreten, ist mit dem Empfang der Quittierung der Information zur Suche eines zu integrierenden Netzteilnehmers abgeschlossen, die der in Sende- bzw. Empfangsreichweite zum ausgewählten Netzteilnehmer positionierte Netzteilnehmer des Verbandes mit der Absicht zur Integration in das ad-hoc-Netzwerk zurücksendet.

In einer zweiten bevorzugten Variante der Erfindung, die ebenfalls sowohl in der ersten Ausführungsform als auch in der zweiten Ausführungsform der Erfindung realisierbar ist, erfolgt die Suche nach einem mit dem ad-hoc-Netzwerk zeitsynchronisierten Verband, in den ein einzelner Netzteilnehmer oder ein Verband von zueinander zeitsynchronisierten Netzteilnehmern beizutreten beabsichtigt, durch den einzelnen Netzteilnehmer oder einen zum Verband von zueinander zeitsynchronisierten Netzteilnehmern gehörigen Netzteilnehmer, der jeweils in Sende- bzw. Empfangsreichweite zum ausgewählten Netzteilnehmers des jeweiligen mit dem ad-hoc-Netzwerk zeitsynchronisierten Verbandes positioniert ist.

Der in Sende- bzw. Empfangsreichweite zu einem ausgewählten Netzteilnehmer eines zum ad-hoc-Netzwerk zeitsynchronisierten Verbandes positionierte einzelne Netzteilnehmer oder Netzteilnehmer eines Verbandes von zueinander zeitsynchronisierten Netzteilnehmern sendet vorzugsweise im Hinblick auf eine Integration in einen mit dem ad-hoc-Netzwerk zeitsynchronisierten Verband eine Information zur Suche eines zeitsynchronisierten Verbandes. Die Identifizierung des einzelnen Netzteilnehmers oder des Verbandes aus zueinander zeitsynchronisierten Netzteilnehmern, der beabsichtigt, in den jeweiligen mit dem ad-hoc-Netzwerk zeitsynchronisierten Verband zu integrieren, ist mit dem Empfang der Information zur Suche eines zeitsynchronisierten Verbandes und einer anschließenden Quittierung dieser empfangenen Information durch den ausgewählten Netzteilnehmer des jeweiligen Verbandes abgeschlossen.

Das Versenden der Information zur Suche eines zu integrierenden Netzteilnehmers, der Information zur Suche eines zeitsynchronisierten Verbandes und der Quittierung dieser Information erfolgt vorzugsweise in hierfür vorgesehen zweiten Zeitintervallen, die im Hinblick auf eine optimierte Übertragungseffizienz und im Hinblick auf eine minimierte Aufklärung bzw. Störung der Integration von Netzteilnehmern in das ad-hoc-Netzwerk durch einen unberechtigten Dritten jeweils eine gleich bleibende minimal mögliche Dauer aufweisen und in einem gegenüber dem Zyklus der Zeitsynchronisierung weit größeren Zeitzyklus wiederholt werden.

Durch die Integration von neuen Netzteilnehmern in bestehende Verbände des ad-hoc-Netzwerkes können Verbände von Netzwerken entstehen, die keinen einzigen Netzteilnehmer aufweisen, der zu jedem übrigen Netzteilnehmer des neu entstandenen Verbandes eine direkte Übertragungsverbindung (sog. One-Hop-Übertragung) aufweist. Um die in diesem Fall auftretende Unmöglichkeit einer Zeitsynchronisierung aller Netzteilnehmer des somit neu entstandenen Verbandes zu vermeiden, wird bevorzugt der neu entstandene Verband in mehrere Unter-Verbände geteilt, die jeweils mindestens einen Netzteilnehmer aufweisen, der zu jedem übrigen Netzteilnehmer des somit geteilten Verbandes eine direkte Übertragungsverbindung aufweist und somit eine Zeitsynchronisierung mit den übrigen Netzteilnehmern des geteilten Verbandes verwirklichen kann.

Schließlich werden vorzugsweise die in einen Verband neu integrierten Netzteilnehmer unmittelbar oder nach einer optional durchgeführten Teilung des durch die Integration neu entstandenen Verbandes mit den übrigen Netzteilnehmern des neu entstandenen geteilten oder ungeteilten Verbandes durch einen Netzteilnehmer mit einer direkten Übertragungsverbindung zu allen Teilnehmern des neu entstandenen geteilten oder ungeteilten Verbandes zeitsynchronisiert.

Die einzelnen bevorzugten Ausführungsformen, Varianten und Untervarianten des erfindungsgemäßen Verfahrens zur Integration von Netzteilnehmern in ein zeitsynchronisiertes ad-hoc-Netzwerk und ein zugehöriges erfindungsgemäßes ad-hoc-Netzwerk werden im Folgenden anhand der Zeichnung im Detail beispielhaft erläutert. Die Figuren der Zeichnung zeigen:
- Fig. 1: eine Darstellung eines in mehrere Cluster eingeteilten mobilen ad-hoc-Netzwerkes,
- Fig. 2A: eine Darstellung eines Clusters eines mobilen ad-hoc-Netzwerkes und eines in den Cluster zu integrierenden Netzteilnehmers vor der Integration,
- Fig. 2B: eine Darstellung eines Clusters eines mobilen ad-hoc-Netzwerkes und eines in den Cluster zu integrierenden Netzteilnehmers nach der Integration,
- Fig. 3A: eine Darstellung eines Clusters eines mobilen ad-hoc-Netzwerkes und eines in den Cluster zu integrierenden weiteren Clusters vor der Integration,
- Fig. 3B: eine Darstellung eines Clusters eines mobilen ad-hoc-Netzwerkes und eines in den Cluster zu integrierenden weiteren Clusters nach der Integration,
- Fig. 4: ein Flussdiagramm eines Ausführungsbeispiels eines erfindungsgemäßen Verfahrens zur Integration von Netzteilnehmern in ein zeitsynchronisiertes ad-hoc-Netzwerk und
- Fig. 5: ein Zeitdiagramm zur Darstellung von ersten und zweiten Zeitintervallen.

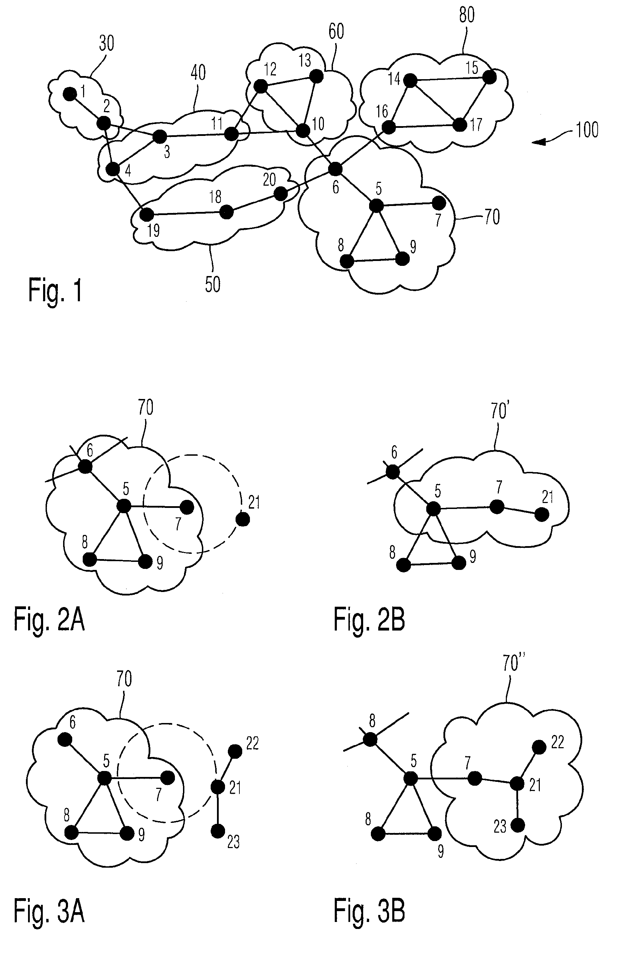

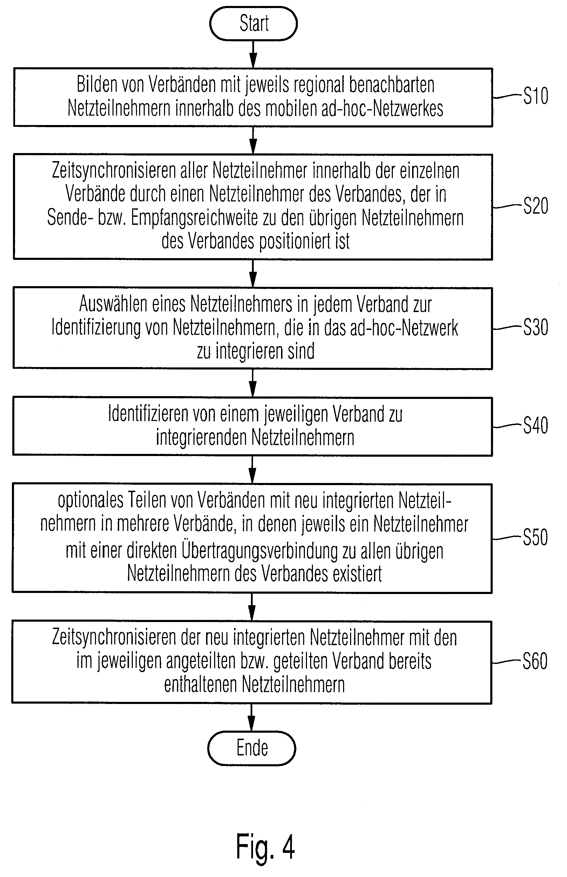

Im Folgenden wird das erfindungsgemäße Verfahren zur Integration von Netzteilnehmern in ein zeitsynchronisiertes ad-hoc-Netzwerk anhand des Flussdiagrammes in Fig. 4 und das zugehörige erfindungsgemäße ad-hoc-Netzwerk ausgehend von Fig. 1 unter weiterer Berücksichtigung der Figuren 2A, 2B, 3A und 3B im Detail erläutert:
Im ersten Verfahrensschritt S10 des erfindungsgemäßen Verfahrens werden gemäß Fig. 1 in einem ad-hoc-Netzwerk 100, das zu einem bestimmten Zeitpunkt aus einer bestimmten Anzahl von Netzteilnehmern 1, 2, 3,..., 18, 19 und 20 - beispielsweise mobilen Funkgeräten - besteht, die untereinander Sprache und/oder Daten austauschen, Verbände - so genannte Cluster - 30, 40, 50, 60, 70 und 80 von jeweils regionalen benachbarten Netzteilnehmern 1, 2, 3,..., 18, 19 und 20 gebildet.

Die Bildung der Cluster 30, 40, 50, 60, 70 und 80 erfolgt vorzugsweise so, dass über einen zentralen Netzteilnehmer des Clusters - in Fig. 1 der Netzteilnehmer 1 oder 2 in Cluster 30, der Netzteilnehmer 3 in Cluster 40, der Netzteilnehmer 18 in Cluster 50, der Netzteilnehmer 10, 12 oder 13 in Cluster 60, der Netzteilnehmer 5 in Cluster 70 und der Netzteilnehmer 14 oder 17 in Cluster 80 - eine Datenübertragung mit den übrigen Netzteilnehmern des jeweiligen Clusters in einem einzigen Übertragungsschritt - so genannte One-Hop-Übertragung - durchgeführt werden kann.

Für die Bildung der einzelne Verbände können die von jedem Netzteilnehmer des ad-hoc-Netzwerkes im Rahmen eines proaktiven Routing-Verfahrens ermittelbaren Kenntnisse über die Topologie des ad-hoc-Netzwerkes und damit über die relativen Positionen der einzelnen Netzteilnehmer im ad-hoc-Netzwerk herangezogen werden. Typischerweise sendet ein Netzteilnehmer, der im Initialisierungszeitpunkt des ad-hoc-Netzwerkes mit keinem weiteren Netzteilnehmer des ad-hoc-Netzwerkes zeitsynchronisiert ist und damit auch noch nicht in einen Verband von zueinander gehörigen Netzteilnehmern eingebunden ist, ein Synchronisierungssignal an alle Netzteilnehmer, die in Sende- bzw. Empfangsreichweite zum sendenden Netzteilnehmer positioniert sind. Nach einer Quittierung des Synchronisierungssignals, das typischerweise eine allen Netzteilnehmern des ad-hoc-Netzwerkes bekannte Synchronisier-Bitsequenz ist, durch die mit dem sendenden Netzteilnehmer in einer direkten Übertragungsverbindung stehenden Netzteilnehmer ist ein Verband von Netzteilnehmern generiert. Mit der Versendung des Synchronisierungssignals und der zugehörigen Quittierung werden typischerweise auch Identifizierungs-Merkmale der jeweiligen Netzteilnehmer, soweit sie für die Bildung eines Verbandes von Netzteilnehmern erforderlich sind, ausgetauscht.

Mit der Generierung einzelner Verbände von jeweils regional benachbarten Netzteilnehmern in einem mobilen ad-hoc-Netzwerk 100 ist somit die erstmalige Zeitsynchronisierung aller Netzteilnehmer innerhalb jedes Verbandes von Netzteilnehmern gemäß Verfahrensschritt S20 bereits durchgeführt. Da sich in einem mobilen ad-hoc-Netzwerk 100 die Topologie und damit die Position der einzelnen Netzteilnehmer kontinuierlich ändern kann, ist eine wiederholte Zeitsynchronisierung aller Netzteilnehmer innerhalb eines Verbandes gemäß Verfahrensschritt S20 durchzuführen.

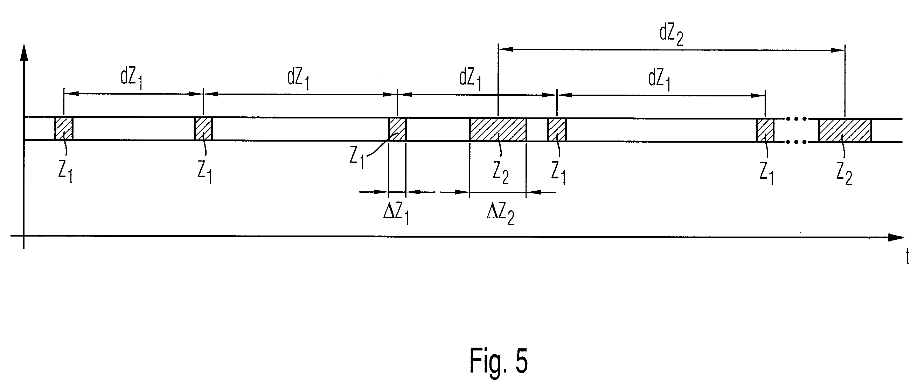

Diese Zeitsynchronisierung wird gemäß Fig. 5 in einzelnen ersten Zeitintervallen Z₁ mit einer minimal möglichen Dauer Δ*Z*₁ durchgeführt, die zur Minimierung einer Störung der Zeitsynchronisierung durch einen unberechtigten Dritten in statistisch schwankenden Zeitabständen dZ₁ zueinander zeitlich beanstandet sind. Ändert sich die Zusammensetzung eines Verbandes aus jeweils regional benachbarten Netzteilnehmern über einen längeren Zeitraum nicht, so kann die in aufeinander folgenden ersten Zeitintervallen Z₁ durchzuführende Zeitsynchronisierung im Hinblick auf eine optimierte Übertragungseffizienz im ad-hoc-Netzwerk ausgesetzt werden.

Neben dieser Zeitsynchronisierung innerhalb der einzelnen Cluster bzw. Verbände des ad-hoc-Netzwerkes - so genannte Intra-Zeitsynchronisierung - ist auch eine Zeitsynchronisierung zwischen den einzelnen Clustern bzw. Verbänden des ad-hoc-Netzwerkes - so genannte Inter-Zeitsynchronisierung - wünschenswert, um eine Zeitsynchronität zwischen allen Netzteilnehmern des ad-hoc-Netzwerkes 100 zu garantieren. Auf eine detaillierte Beschreibung der Inter-Zeitsynchronisierung wird an dieser Stelle verzichtet, da sie für den eigentlichen Erfindungsgedanken unwesentlich ist. Die Inter-Zeitsynchronisierung wird als solche vorausgesetzt und kann beispielsweise der WO 2011/154911 A1 entnommen werden, deren Offenbarung hiermit durch Referenzierung einbezogen wird.

Im nächsten Verfahrensschritt S30 wird in jedem gebildeten Verband 30, 40, 50, 60, 70 und 80 von jeweils regional benachbarten Netzteilnehmern ein Netzteilnehmer ausgewählt, der an der Peripherie des jeweiligen Verbandes positioniert ist und potentielle Netzteilnehmer für eine Integration in den eigenen Verband identifiziert. Im Verband 70 der Fig. 1 werden beispielsweise die Netzteilnehmer 6, 7 und 8 als Netzteilnehmer ausgewählt, die für eine Identifizierung von zu integrierenden Netzteilnehmern verantwortlich sind. Um wiederum die Störung der Integration von neuen Netzteilnehmern in bestehende zeitsynchronisierte Verbände von Netzteilnehmern und damit in das zeitsynchronisierte ad-hoc-Netzwerk weitestmöglich zu verhindern, werden die in aufeinander folgenden ersten Zeitintervallen Z₁ jeweils durchzuführenden Identifizierungsvorgänge durch jeweils einen anderen ausgewählten Netzteilnehmer des jeweiligen zeitsynchronisierten Verbandes durchgeführt.

Für die Reihenfolge, in der an der Peripherie der jeweiligen Verbände positionierte Netzteilnehmer erfindungsgemäß ausgewählt werden, wird beispielsweise die Höhe der Identifizierungsnummer des jeweiligen Netzteilnehmers im ad-hoc-Netzwerk herangezogen. Alternativ können auch andere Kriterien für die Reihenfolge, in der Netzteilnehmer an der Peripherie des jeweiligen Verbandes zur Identifizierung von zu integrierenden Netzteilnehmern ausgewählt werden, herangezogen werden und sind von der Erfindung mit abgedeckt.

Neben dem Kriterium der Position an der Peripherie eines jeweiligen Verbandes zur Auswahl eines Netzteilnehmers zur Identifizierung von zu integrierenden Netzteilnehmern sind bevorzugt Netzteilnehmer auszuwählen, die innerhalb der Sende- bzw. Empfangsreichweite von maximal einer vorher festgelegten Anzahl von zu einem anderen Verband des ad-hoc-Netzwerkes gehörigen Netzteilnehmern positioniert sind. Idealerweise sind insbesondere diejenigen Netzteilnehmer für eine Identifizierung von zu integrierenden Netzteilnehmer auszuwählen, die außerhalb der Sende- bzw. Empfangsreichweite von jedem Netzteilnehmer aller übrigen Verbände des ad-hoc-Netzwerkes positioniert sind. Auf diese Weise ist es wahrscheinlicher, dass ein derart ausgewählter Netzteilnehmer in seinen Verband zu integrierende Netzteilnehmer identifiziert, die nicht bereits einem anderen Verband des ad-hoc-Netzwerkes angehören.

Im darauf folgenden Verfahrensschritt S40 erfolgt die Identifizierung von in einen jeweiligen Verband des ad-hoc-Netzwerkes 100 zu integrierenden Netzteilnehmern durch einen ausgewählten Netzteilnehmer des jeweiligen Verbandes.

In einer ersten Variante der Erfindung erfolgt die Initiative der Identifizierung von in einem Verband des ad-hoc-Netzwerkes zu integrierenden Netzteilnehmern durch den im jeweiligen Verband ausgewählten Netzteilnehmer. Hierzu versendet der ausgewählte Netzteilnehmer in einem der zweiten Zeitintervalle eine Information zur Suche eines zu integrierenden Netzteilnehmers.

Die fixen zeitlichen Abstände dZ₂ zwischen den einzelnen zweiten Zeitintervallen Z₂ und die fixen Dauer ΔZ₂ der einzelnen zweiten Zeitintervalle Z₂ gemäß Fig. 5 werden vorab durch das ad-hoc-Netzwerk 100 festgelegt und den einzelnen Netzteilnehmer des ad-hoc-Netzwerkes 100 kommuniziert. Hierbei sind die zeitlichen Abstände dZ₂ zwischen den einzelnen zweiten Zeitintervallen Z₂ deutlich größer als die zeitlichen Abstände dZ₁ zwischen den einzelnen ersten Zeitintervallen Z₁ dimensioniert, da die Dauer ΔZ₂ eines zweiten Zeitintervalls Z₂ im Vergleich zur Dauer ΔZ₁ eines ersten Zeitintervalls Z₁ deutlich größer anzuberaumen ist und somit die Übertragungseffizienz im ad-hoc-Netzwerk 100 auf ein vertretbares Niveau gehalten wird.

Einzelne Netzteilnehmer, die mit dem ad-hoc-Netzwerk 100 noch nicht zeitsynchronisiert sind und innerhalb der Sende- bzw. Empfangsreichweite des ausgewählten Netzteilnehmer positioniert sind (der einzelne Netzteilnehmer 21 befindet sich innerhalb der in Fig. 2A gestrichelt dargestellten Sende- bzw. Empfangsreichweite des ausgewählten Netzteilnehmers 7), oder Netzteilnehmer, die einem Verband von zueinander zeitsynchronisierten Netzteilnehmern angehören, der noch nicht mit dem ad-hoc-Netzwerk 100 zeitsynchronisiert ist, und innerhalb der Sende- bzw. Empfangsreichweite des ausgewählten Netzteilnehmer positioniert sind (der Netzteilnehmer 21, der dem Verband von zueinander zeitsynchronisierten Netzteilnehmern 21, 22 und 23 angehört, befindet sich innerhalb der in Fig. 3A gestrichelt dargestellten Sende- bzw. Empfangsreichweite des ausgewählten Netzteilnehmer 7) quittieren die empfangene Information zur Suche eines zu integrierenden Netzteilnehmers innerhalb des zweiten Zeitintervalls Z₂. Mit dem Empfang der Quittierung ist die Identifizierung von in den jeweiligen Verband zu integrierenden Netzteilnehmern durch den im jeweiligen Verband ausgewählten Netzteilnehmer im Wesentlichen abgeschlossen. Mit der Quittierung der Information zur Suche eines zu integrierenden Netzteilnehmers erhält der im jeweiligen Verband ausgewählte Netzteilnehmer Identifizierungsdaten der zu integrierenden Netzteilnehmer.

In einer zweiten Variante der Erfindung erfolgt die Initiative der Identifizierung von in einem Verband des ad-hoc-Netzwerkes zu integrierenden Netzteilnehmern durch den einzelnen Netzteilnehmer, der noch nicht in einem Verband von Netzteilnehmern des zeitsynchronisierten ad-hoc-Netzwerks 100 integriert ist und eine Integration beabsichtigt, oder durch einen Netzteilnehmer, der einem Verband von zueinander zeitsynchronisierten Netzteilnehmern angehört, der noch nicht einem Verband von Netzteilnehmern des zeitsynchronisierten ad-hoc-Netzwerkes 100 angehört oder mit dem ad-hoc-Netzwerk 100 noch nicht zeitsynchronisiert ist und eine Integration beabsichtigt. Der einzelne Netzteilnehmer mit Integrationsabsicht oder der zu einem Verband von zeitsynchronisierten Netzteilnehmern mit Integrationsabsicht gehörige Netzteilnehmer, die bzw. der jeweils innerhalb der Sende- bzw. Empfangsreichweite eines ausgewählten Netzteilnehmers in einem mit dem ad-hoc-Netzwerk zeitsynchronisierten Verband positioniert sind bzw. ist, versenden bzw. versendet jeweils innerhalb eines zweiten Zeitintervalls Z₂ eine Information zur Suche eines zeitsynchronisierten Verbandes.

Die Identifizierung eines einzelnen zu integrierenden Netzteilnehmers oder eines Verbandes von zueinander zeitsynchronisierten Netzteilnehmern in einen mit dem ad-hoc-Netzwerk zeitsynchronisierten Verband von jeweils regional benachbarten Netzteilnehmern ist mit dem Empfang der Information zur Suche eines zeitsynchronisierten Verbandes und der Versendung einer Quittierung dieser Informationen durch den ausgewählten Netzteilnehmer eines mit dem ad-hoc-Netzwerk zeitsynchronisierten Verbandes abgeschlossen. Mit dem Empfang der Information zur Suche eines zeitsynchronisierten Verbandes erhält der jeweils ausgewählten Netzteilnehmer zusätzlich auch Identifizierungsdaten der zu integrierenden Netzteilnehmer, während die zu integrierenden Netzteilnehmer mit der Quittierung der Information Identifizierungsdaten der im jeweiligen Verband bereits enthaltenen Netzteilnehmer erhalten.

Im darauf folgenden Verfahrensschritt S50 erfolgt optional eine geeignete Teilung der durch die Integration von mindestens einem Netzteilnehmer vergrößerten Verbände von Netzteilnehmern, falls in einem derart geänderten Verband von Netzteilnehmern kein einziger Netzteilnehmer identifizierbar ist, der zu allen übrigen Netzteilnehmern eines derart geänderten Verbandes von Netzteilnehmern eine direkte Übertragungsverbindung besitzt. Diese Teilung eines derart entstandenen Verbandes von Netzteilnehmern ist in diesem Fall erforderlich, da eine Zeitsynchronisierung aller Netzteilnehmer in einem derart entstandenen Verband von Netzteilnehmern nicht möglich ist. Bei der Teilung eines derartigen Verbandes von Netzteilnehmern sind somit Verbände von Netzteilnehmern zu bilden, in denen jeweils mindestens ein Netzteilnehmer enthalten ist, der zu allen übrigen Netzteilnehmern des geteilten Verbandes von Netzteilnehmern eine direkte Übertragungsverbindung aufweist.

Der in Fig. 2B dargestellte Verband 70' von Netzteilnehmern und der in Fig. 3B dargestellte Verband 70'' von Netzteilnehmern stellen Beispiele von derart geteilten Verbänden von Netzteilnehmern dar, die jeweils einen Netzteilnehmer aufweisen, der mit allen übrigen Netzteilnehmern des geteilten Verbandes von Netzteilnehmern in einer direkten Übertragungsverbindung steht. Im Cluster 70' der Fig. 2B ist dies der Netzteilnehmer 7 und im Cluster 70'' der Fig. 3B ist dies der Netzteilnehmer 21.
Im abschließenden Verfahrensschritt S60 werden die in den einzelnen geteilten oder ungeteilten Verbänden von Netzteilnehmern integrierten Netzteilnehmer über einen Netzteilnehmer, der mit allen übrigen Netzteilnehmern des jeweiligen geteilten oder ungeteilten Verbandes von Netzteilnehmern in einer direkten Übertragungsverbindung steht, mit den übrigen Netzteilnehmern des jeweiligen geteilten oder ungeteilten Verbandes von Netzteilnehmern durch Versendung einer Information zur Zeitsynchronisierung, bevorzugt einer kodierten Synchronisier-Bitsequenz, zeitsynchronisiert.

## Patentansprüche

1. Verfahren zur Integration von Netzteilnehmern in ein zeitsynchronisiertes ad-hoc-Netzwerk (100) mit folgenden Verfahrensschritten:
• Bilden von einzelnen Verbänden (30,40,50,70,80) von jeweils regional benachbarten Netzteilnehmern (1,2,...,19,20),
• Zeitsynchronisieren der Netzteilnehmer (1,2,...,19,20) innerhalb jedes Verbandes (30,40,50,70,80),
• Auswählen eines Netzteilnehmers (7) an der Peripherie jedes Verbandes (70) zum Identifizieren von mindestens einem in den jeweiligen Verband (70) zu integrierenden Netzteilnehmer (21;21,22,23), wobei der ausgewählte Netzteilnehmer (7) auf diejenigen Netzteilnehmer eines Verbandes beschränkt ist, die innerhalb der Sende- bzw. Empfangsreichweite von einer vorher festgelegten maximalen Anzahl von zu einem anderen Verband jeweils gehörigen Netzteilnehmern positioniert sind, und
• Zeitsynchronisieren der Netzteilnehmer (5,7;7) des jeweiligen Verbandes (70;70';70'') mit jedem identifizierten Netzteilnehmer (21;21,22,23).

2. Verfahren nach Anspruch 1,
**dadurch gekennzeichnet,**
**dass** das Identifizieren von mindestens einem in den jeweiligen Verband (70) zu integrierenden Netzteilnehmer (21;21,22,23) wiederholt mit jeweils einem unterschiedlichen ausgewählten Netzteilnehmer (7) durchgeführt wird.

3. Verfahren nach Anspruch 1 oder 2,
**dadurch gekennzeichnet,**
**dass** der ausgewählte Netzteilnehmer (7) auf diejenigen Netzteilnehmer eines Verbandes beschränkt ist, die außerhalb der Sende- bzw. Empfangsreichweite von jedem Netzteilnehmer aller übrigen Verbände positioniert sind.

4. Verfahren nach einem der Ansprüche 1 bis 3,
**dadurch gekennzeichnet,**
**dass** das Zeitsynchronisieren der Netzteilnehmer (1,2,...,19,20) eines Verbandes (30,40,50,70,80) jeweils in ersten Zeitintervallen (Z₁) von bekannter fester Länge (Δ*Z*₁) erfolgt, die in einem statistisch schwankenden zeitlichen Abstand (dZ₁) voneinander beabstandet sind.

5. Verfahren nach Anspruch 4,
**dadurch gekennzeichnet,**
**dass** das Zeitsynchronisieren der Netzteilnehmer (1,2,...,19,20) eines Verbandes (30,40,50,70,80) durch einen Netzteilnehmer des jeweiligen Verbandes erfolgt, der in Sende- bzw. Empfangsreichweite zu allen übrigen Netzteilnehmern des jeweiligen Verbandes positioniert ist und in einem ersten Zeitintervall (Z₁) eine allen Netzteilnehmern (1,2,...,19,20) des ad-hoc-Netzwerkes (100) bekannte Information zum Zeitsynchronisieren versendet.

6. Verfahren nach Anspruch 4 oder 5,
**dadurch gekennzeichnet,**
**dass** das Zeitsynchronisieren der Netzteilnehmer (1,2,...,19,20) eines Verbandes (30,40,50,70,80) unterbleibt, falls sich die Anzahl der Netzteilnehmer in einem Verband nicht ändert.

7. Verfahren nach einem der Ansprüche 1 bis 6,
**dadurch gekennzeichnet,**
**dass** der ausgewählte Netzteilnehmer (7) zum Identifizieren von mindestens einem in den jeweiligen Verband (70;70';70") zu integrierenden Netzteilnehmer (21;21,22,23) eine Information zur Suche eines zu integrierenden Netzteilnehmers versendet.

8. Verfahren nach Anspruch 7,
**dadurch gekennzeichnet,**
**dass** ein Netzteilnehmer (21), der sich in Sende- bzw. Empfangsreichweite des ausgewählten Netzteilnehmers (7) befindet und beabsichtigt, sich in das ad-hoc-Netzwerk (100) zu integrieren, die Information zur Suche eines zu integrierenden Netzteilnehmers im Hinblick auf die Identifizierung eines in den jeweiligen Verband (70;70';70'') zu integrierenden Netzteilnehmers (21;21,22,23) quittiert.

9. Verfahren nach Anspruch 7,
**dadurch gekennzeichnet,**
**dass** ein Netzteilnehmer (21), der sich in Sende- bzw. Empfangsreichweite des ausgewählten Netzteilnehmers (7) befindet und der einem Verband von zueinander synchronisierten Netzteilnehmern (21,22,23) angehört, die beabsichtigen, sich in das ad-hoc-Netzwerk (100) zu integrieren, die Information zur Suche eines zu integrierenden Netzteilnehmers im Hinblick auf die Identifizierung der in den jeweiligen Verband zu integrierenden Netzteilnehmer quittiert.

10. Verfahren nach einem der Ansprüche 1 bis 9,
**dadurch gekennzeichnet,**
**dass** ein einzelner Netzteilnehmer (21) oder ein zu einem Verband von zueinander synchronisierten Netzteilnehmern (21,22,23) gehörender Netzteilnehmer (21), der bzw. die beabsichtigen, sich in das ad-hoc-Netzwerk (100) zu integrieren, eine Information zur Suche eines zeitsynchronisierten Verbandes versendet.

11. Verfahren nach Anspruch 10,
**dadurch gekennzeichnet,**
**dass** ein ausgewählter Netzteilnehmer (7) eines zeitsynchronisiertes Verbandes (70), der sich in Sende- bzw. Empfangsreichweite des die Information zur Suche eines zeitsynchronisierten Verbandes versendenden Netzteilnehmers (21) befindet, im Hinblick auf die Identifizierung des bzw. der in den jeweiligen Verband zu integrierenden Netzteilnehmer(s) (21;21,22,23) die Information zur Suche eines zeitsynchronisierten Verbandes quittiert.

12. Verfahren nach Anspruch 8, 9 oder 11,
**dadurch gekennzeichnet,**
**dass** das Versenden der Information zur Suche eines zu integrierenden Netzteilnehmers, der Information zur Suche eines zeitsynchronisierten Verbandes und der Quittierung in vorher festgelegten zweiten Zeitintervallen (Z₂) erfolgt.

13. Verfahren nach einem der Ansprüche 1 bis 12,
**dadurch gekennzeichnet,**
**dass** jeder Verband nach der Identifizierung von mindestens einem zu integrierenden Netzteilnehmer im Hinblick auf eine Erstellung von Verbänden, in denen jeweils mindesten ein Netzteilnehmer in Sende- bzw. Empfangsreichweite zu allen übrigen Netzteilnehmern des Verbandes vorhanden ist, bei Bedarf in mehrere Verbände geteilt wird.

14. Verfahren nach Anspruch 13,
**dadurch gekennzeichnet,**
**dass** die Zeitsynchronisierung des mindestens einen für die Integration in den jeweiligen Verband identifizierten Netzteilnehmers mit den bisherigen Netzteilnehmern des jeweiligen Verbandes, der nach der Integration von mindestens einem Netzteilnehmer entweder ungeteilt oder geteilt ist, in einem auf einem zweiten Zeitintervall (Z₂) jeweils folgenden ersten Zeitintervall (Z₁) erfolgt.

15. Ad-hoc-Netzwerk (100) mit mindestens einem zeitsynchronisierten Verband (30,40,50,70,80) von jeweils regional benachbarten Netzteilnehmern (1,2,...,19,20) und mindestens einem an der Peripherie des jeweiligen zeitsynchronisierten Verbandes (30,40,50,70,80) ausgewählten Netzteilnehmer zum Ermitteln von mindestens einem in den jeweiligen zeitsynchronisierten Verband 30,40,50,70,80) zu integrierenden Netzteilnehmer, wobei der ausgewählte Netzteilnehmer (7) auf diejenigen Netzteilnehmer eines Verbandes beschränkt ist, die innerhalb der Sende- bzw. Empfangsreichweite von einer vorher festgelegten maximalen Anzahl von zu einem anderen Verband jeweils gehörigen Netzteilnehmern positioniert sind, insbesondere zur Durchführung eines Verfahrens nach einem der Ansprüche 1 bis 14.

16. Ad-hoc-Netzwerk nach Anspruch 15,
**dadurch gekennzeichnet,**
**dass** die ausgewählten Netzteilnehmer jeweils innerhalb der Sende- bzw. Empfangsreichweite von einer vorher festgelegten maximalen Anzahl von zu einem anderen zeitsynchronisierten Verband des ad-hoc-Netzwerkes (100) jeweils gehörigen Netzteilnehmern positioniert sind.

17. Ad-hoc-Netzwerk nach Anspruch 15 oder 16,
**dadurch gekennzeichnet,**
**dass** die ausgewählten Netzteilnehmer jeweils außerhalb der Sende- bzw. Empfangsreichweite jedes Netzteilnehmers aller übrigen zeitsynchronisierten Verbände positioniert sind.

## Claims

1. Method for integrating network participants into a time-synchronised ad hoc network (100) with the following method steps:
- formation of individual clusters (30, 40, 50, 70, 80) of in each case regionally neighbouring network participants (1, 2, ..., 19, 20),
- time-synchronisation of the network participants (1, 2, ..., 19, 20) within each cluster (30, 40, 50, 70, 80),
- selection of a network participant (7) on the periphery of each cluster (70) for identification of at least one network participant (21; 21, 22, 23) to be integrated into the respective cluster (70), wherein the selected network participant (7) is limited to those network participants of a cluster which are positioned within the transmitting or receiving range of a previously determined maximum number of network participants each belonging to another cluster, and
- time-synchronisation of the network participants (5, 7; 7) of the respective cluster (70; 70'; 70") with each identified network participant (21; 21, 22, 23).

2. Method according to claim 1,
**characterised in that**
the identification of at least one network participant (21; 21, 22, 23) to be integrated into the respective cluster (70) is carried out repeatedly with in each case a different selected network participant (7).

3. Method according to claim 1 or 2,
**characterised in that**
the selected network participant (7) is limited to those network participants of a cluster which are positioned outside the transmitting or receiving range of each network participant of all the other clusters.

4. Method according to one of claims 1 to 3,
**characterised in that**
the time-synchronisation of the network participants (1, 2, ..., 19, 20) of a cluster (30, 40, 50, 70, 80) is in each case effected in first time intervals (Z₁) of known fixed length (ΔZ₁) which are separated from one another with a statistically fluctuating time gap (dZ₁).

5. Method according to claim 4,
**characterised in that**
the time-synchronisation of the network participants (1, 2, ..., 19, 20) of a cluster (30, 40, 50, 70, 80) is effected by a network participant of the respective cluster which is positioned within the transmitting or receiving range of all the other network participants of the respective cluster and in a first time interval (Z₁) sends a piece of information known to all the network participants (1, 2, ..., 19, 20) of the ad hoc network (100) for time-synchronisation.

6. Method according to claim 4 or 5,
**characterised in that**
the time-synchronisation of the network participants (1, 2, ..., 19, 20) of a cluster (30, 40, 50, 70, 80) is not carried out if the number of network participants in a cluster does not change.

7. Method according to one of claims 1 to 6,
**characterised in that**
for identification of at least one network participant (21; 21, 22, 23) to be integrated into the respective cluster (70; 70'; 70") the selected network participant (7) sends a piece of information for the search for a network participant to be integrated.

8. Method according to claim 7,
**characterised in that**
a network participant (21) which is located within the transmitting or receiving range of the selected network participant (7) and intends to be integrated into the ad hoc network (100) acknowledges the piece of information for the search for a network participant to be integrated with a view to identification of a network participant (21; 21, 22, 23) to be integrated into the respective cluster (70; 70'; 70").

9. Method according to claim 7,
**characterised in that**
a network participant (21) which is located within the transmitting or receiving range of the selected network participant (7) and belongs to a cluster of network participants (21, 22, 23) which are synchronised with one another and intend to be integrated into the ad hoc network (100), acknowledges the piece of information for the search for a network participant to be integrated with a view to identification of the network participants to be integrated into the respective cluster.

10. Method according to one of claims 1 to 9,
**characterised in that**
an individual network participant (21) or a network participant (21) belonging to a cluster of network participants (21, 22, 23) which are synchronised with one another and which intends to be integrated into the ad hoc network (100), sends a piece of information for the search for a time-synchronised cluster.

11. Method according to claim 10,
**characterised in that**
a selected network participant (7) of a time-synchronised cluster (70) which is located within the transmitting or receiving range of the network participant (21) sending the piece of information for the search for a time-synchronised cluster, acknowledges the piece of information for the search for a time-synchronised cluster with a view to identification of the network participant or participants (21; 21, 22, 23) to be integrated into the respective cluster.

12. Method according to claim 8, 9 or 11,
**characterised in that**
the sending of the information for the search for a network participant to be integrated, the sending of the information for the search for a time-synchronised cluster and the acknowledgement are effected in previously determined second time intervals (Z₂).

13. Method according to one of claims 1 to 12,
**characterised in that**
after the identification of at least one network participant to be integrated each cluster is divided into a plurality of clusters if necessary with a view to setting up clusters in which in each case at least one network participant is present within the transmitting or receiving range of all the other network participants of the cluster.

14. Method according to claim 13,
**characterised in that**
the time-synchronisation of the at least one network participant identified for integration into the respective cluster with the existing network participants of the respective cluster which is either undivided or divided after the integration of at least one network participant, is effected in a first time interval (Z₁) in each case following a second time interval (Z₂).

15. Ad hoc network (100) with at least one time-synchronised cluster (30, 40, 50, 70, 80) of in each case regionally neighbouring network participants (1, 2, ..., 19, 20) and at least one selected network participant on the periphery of the respective time-synchronised cluster (30, 40, 50, 70, 80) for determining at least one network participant to be integrated into the respective time-synchronised cluster (30, 40, 50, 70, 80), wherein the selected network participant (7) is limited to those network participants of a cluster which are positioned within the transmitting or receiving range of a previously determined maximum number of network participants belonging in each case to another cluster, in particular for implementing a method according to one of claims 1 to 14.

16. Ad hoc network according to claim 15,
**characterised in that**
the selected network participants are in each case positioned within the transmitting or receiving range of a previously determined maximum number of network participants in each case belonging to another time-synchronised cluster of the ad hoc network (100).

17. Ad hoc network according to claim 15 or 16,
**characterised in that**
the selected network participants are in each case positioned outside the transmitting or receiving range of each network participant of all the other time-synchronised clusters.

## Revendications

1. Procédé d'intégration d'abonnés de réseau dans un réseau ad hoc synchronisé dans le temps (100) comportant les étapes de procédé suivantes :
• la formation de différentes associations (30, 40, 50, 70, 80) d'abonnés de réseau proches régionaux respectifs (1, 2,..., 19, 20),
• la synchronisation dans le temps d'abonnés de réseau (1, 2,..., 19, 20) à l'intérieur de chaque association (30, 40, 50, 70, 80),
• la sélection d'un abonné de réseau (7) à la périphérie de chaque association (70) pour identifier au moins l'un d'un abonné de réseau (21 ; 21, 22, 23) à intégrer dans l'association respective (70), où l'abonné de réseau sélectionné (7) est limité aux abonnés de réseau d'une association, qui se trouvent à l'intérieur de la portée d'émission ou de réception d'un nombre maximal préalablement déterminé d'abonnés de réseau appartenant respectivement à une autre association, et
• la synchronisation dans le temps des abonnés de réseau (5, 7 ; 7) de l'association respective (70; 70' ; 70") avec chaque abonné de réseau identifié (21 ; 21, 22, 23).

2. Procédé selon la revendication 1,
**caractérisé en ce que**
l'identification d'au moins un abonné de réseau (21 ; 21, 22, 23) à intégrer dans une association respective (70) est effectuée à plusieurs reprises avec un abonné de réseau sélectionné différent (7).

3. Procédé selon la revendication 1 ou 2,
**caractérisé en ce que**
l'abonné de réseau sélectionné (7) est limité aux abonnés de réseau d'une association, qui se trouvent à l'extérieur de la portée d'émission ou de réception de chaque abonné de réseau de toutes les autres associations.

4. Procédé selon l'une des revendications 1 à 3,
**caractérisé en ce que**
la synchronisation dans le temps des abonnés de réseau (1, 2,..., 19, 20) d'une association (30, 40, 50, 70, 80) est effectuée respectivement dans des premiers intervalles de temps (Z₁) de longueur fixe connue (ΔZ₁), qui sont espacés l'un de l'autre d'un écart temporel variable statistiquement (dZ₁).

5. Procédé selon la revendication 4,
**caractérisé en ce que**
la synchronisation dans le temps des abonnés de réseau (1, 2..., 19, 20) d'une association (30, 40, 50, 70, 80) est effectuée par un abonné de réseau de l'association respective, qui est positionné à portée d'émission ou de réception de tous les autres abonnés de réseau de l'association respective et envoie dans un premier intervalle de temps (Z₁) une information pour une synchronisation dans le temps connue de tous les abonnés de réseau (1, 2,..., 19, 20) du réseau ad hoc (100).

6. Procédé selon la revendication 4 ou 5,
**caractérisé en ce que**
la synchronisation dans le temps des abonnés de réseau (1, 2,..., 19, 20) d'une association (30, 40, 50, 70, 80) n'a pas lieu, au cas où le nombre d'abonnés de réseau dans une association ne change pas.

7. Procédé selon l'une des revendications 1 à 6,
**caractérisé en ce que**
l'abonné de réseau sélectionné (7) envoie une information pour rechercher un abonné de réseau à intégrer en vue de l'identification d'au moins un abonné de réseau à intégrer (21 ; 21, 22, 23) dans l'association respective (70; 70' ; 70").

8. Procédé selon la revendication 7,
**caractérisé en ce que**
un abonné de réseau (21), qui se trouve à portée d'émission ou de réception de l'abonné de réseau sélectionné (7) et désire s'intégrer dans le réseau ad hoc (100), accuse réception de l'information pour rechercher un abonné de réseau à intégrer compte tenu de l'identification d'un abonné de réseau à intégrer (21 ; 21, 22) dans l'association respective (70 ; 70' ; 70").

9. Procédé selon la revendication 7,
**caractérisé en ce que**
un abonné de réseau (21) qui se trouve à portée d'émission ou de réception de l'abonné sélectionné (7) et qui appartient à une association d'abonnés de réseau synchronisés les uns aux autres (21, 22, 23), qui désirent s'intégrer dans le réseau ad hoc (100), accuse réception de l'information pour rechercher un abonné de réseau à intégrer compte tenu de l'identification de l'abonné de réseau à intégrer dans l'association respective.

10. Procédé selon l'une des revendications 1 à 9,
**caractérisé en ce que**
un abonné de réseau seul (21) ou un abonné de réseau (21) appartenant à une association d'abonnés de réseau synchronisés les uns aux autres (21, 22, 23), qui désire ou qui désirent s'intégrer dans le réseau ad hoc (100), envoie une information pour rechercher une association synchronisée dans le temps.

11. Procédé selon la revendication 10,
**caractérisé en ce que**
un abonné de réseau sélectionné (7) d'une association synchronisée dans le temps (70), qui se trouve à portée d'émission ou de réception de l'abonné de réseau (21) envoyant l'information pour rechercher une association synchronisée dans le temps, accuse réception de l'information pour rechercher une association synchronisée dans le temps compte tenu de l'identification du ou des abonnés de réseau (21 ; 21, 22, 23) à intégrer dans l'association respective.

12. Procédé selon la revendication 8, 9 ou 11,
**caractérisé en ce que**
l'envoi de l'information pour rechercher un abonné de réseau à intégrer, de l'information pour rechercher une association synchronisée dans le temps et de l'accusé de réception s'effectue dans des seconds intervalles de temps préalablement déterminés (Z₂).

13. Procédé selon l'une des revendications 1 à 12,
**caractérisé en ce que**
chaque association est divisée au besoin en plusieurs associations après l'identification d'au moins un abonné de réseau à intégrer compte tenu de l'établissement d'associations, dans lesquelles il existe respectivement au moins un abonné de réseau à portée d'émission ou de réception de tous les autres abonnés de réseau de l'association.

14. Procédé selon la revendication 13,
**caractérisé en ce que**
la synchronisation dans le temps du au moins un abonné de réseau identifié pour l'intégration dans l'association respective avec les abonnés de réseau actuels de l'association respective, qui est soit sous-divisée soit divisée après l'intégration d'au moins un abonné de réseau, est effectuée dans un premier intervalle (Z₁) suivant respectivement un second intervalle de temps (Z₂).

15. Réseau ad hoc (100) comportant au moins une association synchronisée dans le temps (30, 40, 50, 70, 80) d'abonnés de réseau proches régionaux respectifs (1, 2,..., 19, 20) et au moins un abonné de réseau sélectionné à la périphérie de l'association synchronisée dans le temps respective (30, 40, 50, 70, 80) pour déterminer au moins un abonné de réseau à intégrer dans l'association synchronisée dans le temps respective (30, 40, 50, 70, 80), dans lequel l'abonné de réseau sélectionné (7) est limité aux abonnés de réseau d'une association, qui se trouvent à l'intérieur de la portée d'émission ou de réception d'un nombre maximal préalablement déterminé d'abonnés de réseau appartenant respectivement à une autre association, en particulier pour l'exécution d'un procédé selon l'une des revendications 1 à 14.

16. Réseau ad hoc selon la revendication 15,
**caractérisé en ce que**
les abonnés de réseau sélectionnés se trouvent respectivement à l'intérieur de la portée d'émission ou de réception d'un nombre maximal préalablement déterminé d'abonnés de réseau appartenant respectivement à une autre association synchronisée dans le temps du réseau ad hoc (100).

17. Réseau ad hoc selon la revendication 15 ou 16,
**caractérisé en ce que**
les abonnés de réseau sélectionnés se trouvent à l'extérieur de la portée d'émission ou de réception de chaque abonné de réseau de toutes les autres associations synchronisées dans le temps.
